(19) Europäisches Patentamt
European Patent Office
Office européen des brevets

(11) **EP 4 660 143 A1**

(12) **EUROPEAN PATENT APPLICATION**
published in accordance with Art. 153(4) EPC

(43) Date of publication:
**10.12.2025 Bulletin 2025/50**

(21) Application number: **24750009.3**

(22) Date of filing: **22.01.2024**

(51) International Patent Classification (IPC):
***C01G 23/00*** (2006.01)

(52) Cooperative Patent Classification (CPC):
**C01G 23/00**

(86) International application number:
**PCT/JP2024/001576**

(87) International publication number:
**WO 2024/162056 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.01.2023 JP 2023011991**

(71) Applicant: **Toda Kogyo Corp.**
**Hiroshima-shi, Hiroshima 732-0828 (JP)**

(72) Inventors:
• **KAWAI, Yoshiki**
**Otake-shi, Hiroshima 739-0652 (JP)**

• **KAWAGUCHI, Takamoto**
**Otake-shi, Hiroshima 739-0652 (JP)**
• **TAMARI, Kousaku**
**Otake-shi, Hiroshima 739-0652 (JP)**
• **UEMOTO, Shinji**
**Otake-shi, Hiroshima 739-0652 (JP)**
• **MITANI, Yoshifumi**
**Otake-shi, Hiroshima 739-0652 (JP)**
• **ZHANG, Anyu**
**Otake-shi, Hiroshima 739-0652 (JP)**

(74) Representative: **Schiweck Weinzierl Koch**
**Patentanwälte Partnerschaft mbB**
**Ganghoferstraße 68 B**
**80339 München (DE)**

(54) **POWDER OF FINE BARIUM STRONTIUM TITANATE PARTICLES, PRODUCTION METHOD THEREFOR, DISPERSION, AND RESIN COMPOSITION**

(57) The disclosure relates to barium strontium titanate, and to a barium strontium titanate fine particle powder, characterized in that the average primary particle size of the primary particles is 50 nm or less, and the difference between the theoretical lattice constant and the lattice constant is 0 Å or more and 0.0080 Å or less. The disclosure also relates to a method for producing a barium strontium titanate fine particle powder, characterized in that a titanium raw material is mixed with an alkaline aqueous solution, a neutralization reaction is performed to obtain a hydrous titanium hydroxide slurry, the slurry is washed with water and heated, the slurry is added to a mixed solution of an aqueous strontium solution and an aqueous barium solution, and a wet reaction is carried out at a temperature range of 100 to 300°C, followed by washing the slurry with water and drying the slurry.

**EP 4 660 143 A1**

## Description

### TECHNICAL FIELD

An object of the present invention is to obtain a barium strontium titanate fine particle powder that is optimal as a filler.

### BACKGROUND ART

With a recent increase in demand for cross reality (XR) devices, there is an increasing need for high refractive index resin compositions.

For example, brightness enhancement films used in displays and diffractive optical elements used in XR glasses and the like require high refractive index that cannot be achieved by resin alone in order to obtain characteristics such as high brightness, thin film, improved viewing angle, etc. Therefore, hybrid materials in which inorganic fillers with high refractive index are added to resins are being considered to improve the refractive index of resin films.

In such hybrid materials, inorganic fillers are dispersed in a solvent or resin before use. The inorganic fillers are required to have a sufficiently small particle size so that the composite film formed by mixing with the resin and coating can be transparent without causing white turbidity.

Furthermore, in addition to the particle size, the inorganic filler particles themselves are required to have high crystallinity and high refractive index properties.

On the other hand, barium strontium titanate is a highly functional material with a perovskite structure, and is used alone for a variety of purposes. Barium strontium titanate is used, for example, in optical applications such as pigments, reflectors and light collectors, taking advantage of its high refractive index, and in ceramic capacitors, etc., because of its high dielectric constant.

It is expected that by forming a composite of this highly functional barium strontium titanate with resin, it will be possible to create a new material with functionality that cannot be achieved with resin alone.

However, barium strontium titanate fine particle powders suitable for a filler as described above are currently in high demand, but have not yet been obtained.

### CITATION LIST

### PATENT LITERATURE

[Patent Literature 1] International Publication WO2011/4750
[Patent Literature 2] Japanese Laid-Open Patent Publication No. hei-6-64924
[Patent Literature 3] Japanese Laid-Open Patent Publication No. hei-4-16513

### SUMMARY OF INVENTION

### TECHNICAL PROBLEM

Conventionally, there have been various reports on barium strontium titanate fine particles (Patent Literatures 1 to 3).

Patent Literature 1 describes barium strontium titanate having a primary particle size of 5 to 45 nm, but the lattice constant is significantly wider than the theoretical value and the crystallinity is low, making it unsuitable as a filler that requires high refractive index.

In addition, Patent Literature 2 describes barium strontium titanate having an average particle size of 70 to 50,000 nm, but the average particle size is large and transparency is not obtained when applied to a resin, so it is not suitable as a filler. In addition, there is no description about crystallinity.

In addition, Patent Literature 3 describes a method for producing barium strontium titanate with a primary particle size of 50 to 100 nm, a lattice constant of 3.955 Å, and 70% barium incorporated as a solid solution therein, but when this lattice constant value is applied to Vegard's law, it is lower than the theoretical value, and it is presumed that barium strontium titanate and strontium titanate are generated simultaneously. Therefore, when applied to a resin, the properties as a high refractive index filler are not fully exhibited. In addition, it is difficult to say that it is suitable as a filler for a highly transparent composite film.

Therefore, the technical objective of the present invention is to provide a barium strontium titanate fine particle powder that can be dispersed in solvents and resins and is suitable as a transparent, high refractive index filler, a method for producing the same, and to provide a highly transparent dispersion containing the filler.

SOLUTION TO PROBLEM

The above technical object can be achieved by the present invention as follows.

That is, the present invention provides a barium strontium titanate fine particle powder having an average primary particle size of 50 nm or less, and a value calculated by a-(4.005-0.102x) of 0 Å or more and 0.008 Å or less, where a is the lattice constant of the particle determined by X-ray diffraction structure analysis, and x is the strontium content in the composition, Sr/(Sr+Ba) (Invention 1).

The present invention relates to the barium strontium titanate fine particle powder according to Invention 1, which has a composition represented by Ba:Sr=(1-x):x (0<x<1) (Invention 2).

The present invention is a method for producing a barium strontium titanate fine particle powder, which comprises mixing a titanium raw material with an alkaline aqueous solution, neutralizing the mixture to obtain a hydrous titanium hydroxide slurry, washing the slurry with water, heating the slurry, then, adding the slurry to a mixed solution of an aqueous strontium solution and an aqueous barium solution, and subjecting the slurry to a wet reaction at a temperature range of 100 to 300°C, followed by washing the slurry with water and drying the slurry (Invention 3).

The present invention relates to a dispersion containing the barium strontium titanate fine particle powder according to Invention 1 (Invention 4).

The present invention relates to a resin composition containing the barium strontium titanate fine particle powder according to Invention 1 (Invention 5).

ADVANTAGEOUS EFFECTS OF INVENTION

According to the present invention, the barium strontium titanate fine particle powder is a fine particle, so that when it is combined with a resin, it can form a colorless and highly transparent thin film, and has high refractive index due to its high crystallinity. Therefore, the barium strontium titanate fine particle powder according to the present invention can be processed and deployed for various industrial applications. A dispersion containing the particles has high refractive index and can provide a highly transparent composite film, i.e., a coating, especially a thin film. Furthermore, a resin composition containing the filler can form a functional resin composition.

In addition, the production method according to the present invention is a wet production method, and does not require high-temperature treatment, making it easy to produce on an industrial scale.

DESCRIPTION OF EMBODIMENTS

The configuration of the present invention will be described in detail as follows.

The barium strontium titanate fine particle powder according to the present invention is a fine particle powder having an average primary particle size of 50 nm or less, and a value calculated by a-(4.005-0.102x) of 0 Å or more and 0.008 Å or less, where a is the lattice constant of the particle obtained from X-ray diffraction structure analysis, and x is the value of the strontium content in the composition determined from X-ray diffraction structure analysis, Sr/(Sr+Ba).

The average primary particle size of the barium strontium titanate fine particle powder according to the present invention is 50 nm or less. By controlling the average primary particle size within the above range, it can be uniformly dispersed in the resin film, and a transparent composite film can be obtained. The more preferred average primary particle size is 45 nm or less, and even more preferred is 40 nm or less. The lower limit is about 8 nm.

The barium strontium titanate fine particle powder according to the present invention is preferably a white powder with little aggregation and uniform particle size and shape. The shape is not particularly limited, but is preferably spherical, rectangular, or cubic, and more preferably spherical because it can improve the filling property as a composite film filler.

The lattice constant a of the particle obtained by the X-ray diffraction structure analysis in the present invention is a value representing the crystalline state of the particle. The theoretical lattice constant in the present invention is a constant representing the crystallinity of the theoretical ideal state of barium strontium titanate, and can be obtained from 4.005-0.102x in the above formula, i.e., Vegard's law. The smaller the difference between the lattice constant a obtained by the X-ray diffraction structure analysis and the theoretical lattice constant, the closer the crystallinity is to the bulk characteristics in the ideal state, which means that the refractive index is higher.

If the difference between the theoretical lattice constant and the lattice constant a is greater than 0.0080 Å, it is considered that a large amount of moisture or hydroxyl groups is incorporated into the crystal of barium strontium titanate, and there is a risk of a decrease in the refractive index. A more preferable value of the difference between the theoretical lattice constant and the lattice constant a is 0.0075 Å or less, and even more preferably 0.0070 Å or less.

The lower limit of the difference of the theoretical lattice constant with respect to the lattice constant a is 0 Å. In the case of a multi-phase in which barium strontium titanate and strontium titanate are present simultaneously, the peaks of the X-ray diffraction structure analysis overlap, and the difference of the theoretical lattice constant with respect to the lattice constant a shows a negative value. In the case of a multi-phase, i.e., a mixture, uniformity of characteristics cannot be obtained, and there is a risk of bias occurring in the characteristics of the resin composition, i.e., the composite.

The composition of the barium strontium titanate fine particle powder according to the present invention is expressed by Ba:Sr=(1-x):x (0<x<1), and has higher refractive index than barium titanate and strontium titanate. Therefore, the Sr/(Sr+Ba) molar ratio of the barium strontium titanate fine particle powder according to the present invention is preferably greater than 0 and smaller than 1. When Sr/(Sr+Ba) is 0, there is a risk that barium titanate will be obtained, and when it is 1, there is a risk that strontium titanate will be obtained. More preferably, it is 0.0010 or more and 0.9990 or less, and even more preferably 0.0015 or more and 0.9985 or less.

The (Sr+Ba)/Ti molar ratio of the barium strontium titanate fine particle powder according to the present invention is preferably 0.70 to 1.10. By setting (Sr+Ba)/Ti in this range, a single-phase uniform barium strontium titanate can be obtained, so that the properties of barium strontium titanate can be exhibited. More preferably, (Sr+Ba)/Ti is 0.75 to 1.075, and even more preferably, 0.80 to 1.05. In this case, the fine particle powder may contain at least one of Mg, Ca, Zr, Hf, Nb, etc.

The refractive index of the barium strontium titanate fine particle powder according to the present invention is preferably 2.12 or more. If the refractive index of the fine particle powder is less than 2.12, there is a risk that sufficient refractive index cannot be obtained in a resin composition containing the barium strontium titanate fine particle powder and a resin. More preferably, it is 2.14 or more, and even more preferably, it is 2.16 or more. The upper limit of the refractive index of the particles is about 2.5.

The specific surface area (BET) of the barium strontium titanate fine particle powder according to the present invention is preferably 20.0 to 90.0 $m^2/g$, more preferably 22.5 to 75.0 $m^2/g$, and even more preferably 25.0 to 60.0 $m^2/g$. This is because, if the BET of the fine particle powder is within the above range, the particle surface is smooth, and the amount of a dispersant can be reduced when preparing a dispersion.

The particle density of the barium strontium titanate fine particle powder according to the present invention is preferably 4.45g/cc or more, more preferably 4.55g/cc or more, and even more preferably 4.60g/cc or more. If the particle density of the fine particle powder is within the above range, the particle structure defects, carbonate radicals, and impurities are reduced, so that the particles have high crystallinity and high refractive index. The upper limit is not particularly set, but is about 6.02g/cc.

Next, a method for producing the barium strontium titanate fine particle powder according to the present invention will be described.

The barium strontium titanate fine particle powder according to the present invention can be obtained by mixing a titanium raw material with an alkaline aqueous solution, obtaining a hydrous titanium hydroxide slurry by a neutralization reaction, washing with water, heating, and then adding the slurry to a mixed solution of an aqueous strontium solution and an aqueous barium solution, causing a wet reaction in the temperature range of 100 to 300°C, followed by washing with water and drying.

The titanium raw material may be titanium tetrachloride, and the alkaline raw material used for the alkaline aqueous solution may be strontium hydroxide, barium hydroxide, sodium hydroxide, or the like.

The ratio of the titanium raw material and alkaline aqueous solution added in the neutralization reaction for producing barium strontium titanate core particles (Sr/Ti, Ba/Ti) is preferably 1.1 to 1.8 in molar ratio. When the ratio is less than 1.1, the production yield of barium strontium titanate core particles decreases, and when it exceeds 1.8, the particle size distribution of primary particles of barium strontium titanate deteriorates. The ratio of the titanium raw material and alkaline aqueous solution added in the neutralization reaction is more preferably 1.25 to 1.65 in molar ratio. When sodium hydroxide is used as the alkaline aqueous solution, the molar ratio range of twice as much as mentioned above is preferable.

After the neutralization reaction, the obtained hydrous titanium hydroxide slurry is washed with water to a degree sufficient to remove impurities, and heated to reduce the temperature difference with the solution during the reaction to obtain uniform particles. There is no particular limitation on the heating method, and a mantle heater or an electric heater can be used. Then, the slurry is added to a mixed solution of an aqueous strontium hydroxide solution and an aqueous barium hydroxide solution. The aqueous strontium solution can be an aqueous solution of strontium hydroxide or strontium acetate, and the aqueous barium solution can be an aqueous solution of barium hydroxide or barium acetate.

The strontium hydroxide aqueous solution and the barium hydroxide aqueous solution are added so that the molar ratio (Sr+Ba)/Ti relative to Ti in the reaction solution is 1.5 to 3.0. At this time, the amount of Sr and Ba added is preferably 0.05 to 2.95, more preferably 0.2 to 1.8, relative to Ti. Thereafter, barium strontium titanate fine particles are generated by a wet reaction. The pH of the wet reaction solution is preferably 11 to 13.5.

The reaction concentration of the wet reaction solution for producing barium strontium titanate fine particles is preferably 0.05 to 0.7 mol/L in terms of barium strontium titanate. If the reaction concentration of the wet reaction solution is less than 0.05 mol/L, the yield is low and not industrially viable, and if it is 0.7 mol/L or more, the amount of strontium hydroxide in the wet reaction solution exceeds the solubility, causing $Sr(OH)_2$ to precipitate, which may make it difficult to carry out a uniform liquid phase reaction.

Examples of the wet reaction include a normal pressure reaction, a pressurized reaction, and a hydrothermal synthesis in a wet reaction, and one or more reaction steps may be combined. The reaction temperature is preferably 100 to 300°C, and it is preferable to use a hydrothermal synthesis wet reaction. If the reaction temperature is less than 100°C, it is difficult to obtain highly crystalline barium strontium titanate fine particles. If the reaction temperature exceeds 300°C, it is difficult to design the container. The reaction temperature is more preferably 105 to 280°C. During the wet reaction, it is preferable to flow a nitrogen gas or the like and control it so that the strontium compound and the barium compound do not react with carbon dioxide gas or the like in the air.

The reaction time of the wet reaction is preferably 1 to 24 hours. If the reaction time is shorter than 1 hour, there is a risk that sufficient crystallinity cannot be obtained, and if it is longer than 24 hours, the productivity is poor and it is not industrially feasible. The reaction time is more preferably 1.5 to 16 hours, and even more preferably 2 to 12 hours.

The particles after the wet reaction can be washed with water and dried in a conventional manner. By washing with water, excess strontium and barium can be washed away, and impurities such as Na, K, and Cl can also be removed at the same time.

The barium strontium titanate slurry and fine particle powder obtained in the previous step may be subjected to calcination, pulverization, deagglomeration, and surface treatment.

Next, a dispersion containing the barium strontium titanate fine particle powder according to the present invention will be described.

The solvent used in the dispersion containing the barium strontium titanate fine particle powder according to the present invention can be either water-based or solvent-based. The solvent used in the dispersion can be one or a mixture of two or more depending on the intended use.

Examples of the water-based dispersion solvent include water, or alcohol-based solvents such as methyl alcohol, ethyl alcohol, propyl alcohol, isopropyl alcohol, and butyl alcohol; glycol ether-based solvents such as methyl cellosolve, ethyl cellosolve, propyl cellosolve, and butyl cellosolve; oxyethylene or oxypropylene addition polymers such as diethylene glycol, triethylene glycol, polyethylene glycol, dipropylene glycol, tripropylene glycol, and polypropylene glycol; alkylene glycols such as ethylene glycol, propylene glycol, and 1,2,6-hexanetriol; and water-soluble organic solvents such as glycerin and 2-pyrrolidone.

Examples of the solvent-based dispersion solvent include aromatic hydrocarbons such as toluene and xylene; ketones such as methyl ethyl ketone and cyclohexanone; amides such as N,N-dimethylformamide, N,N-dimethylacetamide and N-methylpyrrolidone; ether alcohols such as ethylene glycol monomethyl ether, ethylene glycol monoethyl ether, diethylene glycol monomethyl ether, propylene glycol monomethyl ether and propylene glycol monoethyl ether; ether acetates such as ethylene glycol monomethyl ether acetate, ethylene glycol monoethyl ether acetate, propylene glycol monomethyl ether acetate and propylene glycol monoethyl ether acetate; acetate esters such as ethyl acetate, butyl acetate and isobutyl acetate; lactate esters such as methyl lactate, ethyl lactate and propyl lactate; cyclic esters such as ethylene carbonate, propylene carbonate and $\gamma$-butyrolactone; and various monomers.

The concentration of the barium strontium titanate fine particle powder contained in the dispersion according to the present invention, i.e., the solid content in the dispersion, is preferably 5 to 60% by weight. If the solid content in the dispersion is less than 5% by weight, the productivity for use in the next step is low, and if it exceeds 60% by weight, the fluidity of the dispersion decreases, and there is a risk of poor handling. The solid content in the dispersion is more preferably 10 to 55% by weight, and even more preferably 15 to 50% by weight.

The dispersion according to the present invention can also contain dispersants, additives (resin, defoaming agent, auxiliary agent, etc.) as necessary. The dispersant in the present invention can be appropriately selected and used according to the type of the barium strontium titanate fine particle powder or dispersion medium used, and organic silicon compounds such as alkoxysilane, silane coupling agent and organopolysiloxane; organic titanium compounds such as titanate coupling agent; organic aluminum compounds such as aluminate coupling agent; organic zirconium compounds such as zirconate coupling agent; surfactants or polymer dispersants, and the like can be used, and these can be used alone or in combination of two or more.

Examples of the organic silicon compound include alkoxysilanes such as methyltrimethoxysilane, methyltriethoxysilane, dimethyldiethoxysilane, phenyltriethoxysilane, ethyltriethoxysilane, propyltriethoxysilane, butyltriethoxysilane, hexyltriethoxysilane, octyltriethoxysilane, tetraethoxysilane, and tetramethoxysilane; silane coupling agents such as vinyltrimethoxysilane, vinyltriethoxysilane, $\gamma$-aminopropyltriethoxysilane, $\gamma$-glycidoxypropyltrimethoxysilane, $\gamma$-mercaptopropyltrimethoxysilane, $\gamma$-methacryloyloxypropyltrimethoxysilane, N-($\beta$-aminoethyl)-$\gamma$-aminopropyltrimethoxysilane, $\gamma$-glycidoxypropylmethyldimethoxysilane, and $\gamma$-chloropropyltrimethoxysilane; and organopolysiloxanes such as polysiloxane, methylhydrogenpolysiloxane, and modified polysiloxane.

Examples of the organic titanium compound include isopropyl triisostearoyl titanate, isopropyl tris(dioctyl pyrophosphate) titanate, bis(dioctyl pyrophosphate)oxyacetate titanate, isopropyl tri(N-aminoethyl aminoethyl) titanate, tris(dioctyl pyrophosphate)ethylene titanate, isopropyl dioctyl pyrophosphate titanate, isopropyl tris(dodecylbenzenesulfonyl) titanate, titanium tetra-n-butoxide, titanium tetra-2-ethylhexoxide, tetraisopropyl bis(dioctyl phosphite)titanate, tetraoctyl bis(ditridecyl phosphite)titanate, tetra(2,2-diallyloxymethyl-1-butyl)bis(ditridecyl)phosphite titanate, tetraoctyl bis(ditridecyl phosphate)titanate, tetra(2-2-diallyloxymethyl-1-butyl)bis(ditridecyl)phosphate titanate, bis(dioctyl pyrophosphate)oxyacetate titanate, bis(dioctyl pyrophosphate)ethylene titanate, and the like.

Examples of the organic aluminum compound include acetoalkoxyaluminum diisopropylate, aluminum diisopropoxymonoethylacetoacetate, aluminum trisethylacetoacetate, aluminum trisacetylacetonate, and the like.

Examples of the organic zirconium compound include zirconium tetrakis acetylacetonate, zirconium dibutoxy bis acetylacetonate, zirconium tetrakis ethyl acetoacetate, zirconium tributoxy monoethyl acetoacetate, and zirconium tributoxy acetylacetonate, and the like.

Examples of the above surfactants include anionic surfactants such as fatty acid salts, sulfate esters salts, sulfonate salts, and phosphate esters salts; nonionic surfactants such as polyethylene glycol-type nonionic surfactants such as polyoxyethylene alkyl ethers and polyoxyethylene aryl ethers, and polyhydric alcohol-type nonionic surfactants such as sorbitan fatty acid esters; cationic surfactants such as amine salt-type cationic surfactants and quaternary ammonium salt-type cationic surfactants; and amphoteric surfactants such as alkyl betaines such as alkyl dimethylaminoacetate betaines and alkyl imidazolines.

Examples of the polymer dispersant include a styrene-acrylic acid copolymer, a styrene-maleic acid copolymer, a polycarboxylic acid and a salt thereof.

The amount of the dispersant added depends on the total surface area of the barium strontium titanate fine particle powder in the dispersion, and may be appropriately adjusted according to the purpose of the dispersion of the barium strontium titanate fine particle powder and the type of dispersant. The amount of the dispersant added is not particularly limited as long as it can disperse the barium strontium titanate fine particle powder uniformly and finely in the dispersion medium and improve the dispersion stability, but it is preferable to add about 0.01 to 100% by weight relative to the barium strontium titanate fine particle powder in the dispersion medium. In addition, the dispersant may be added directly to the dispersion medium, or may be previously treated with the barium strontium titanate fine particle powder.

The method for producing the dispersion of the barium strontium titanate fine particle powder according to the present invention is not limited as long as it is a method in which the barium strontium titanate fine particle powder and a solvent are contained, and the above-mentioned dispersant and additives contained as necessary adhere to, coat or react with all or part of the surface of the fine particles, and a bead mill and the like are mentioned.

By carrying out the surface treatment, particle aggregation can be suppressed while maintaining the shape and particle size of the fine particles. Furthermore, the dispersion stability in various solvents and the transparency in resins for high refractive index can be improved, so that the surface treatment may be appropriately carried out depending on the application.

Next, a resin composition containing the barium strontium titanate fine particle powder according to the present invention will be described.

The resin used in the resin composition according to the present invention is not particularly limited, and examples of the resin that can be used include acrylic resin, polycarbonate, polystyrene resin, polyester resin, polyimide resin, polymethyl methacrylate (PMMA), AS resin, silicone resin, fluororesin, etc. These are appropriately selected depending on the application and purpose, and can be used alone or in combination of two or more kinds.

In addition, additives such as a polymerization initiator, a dispersion stabilizer, and a leveling agent may also be contained.

The amount of the barium strontium titanate fine particle powder added to the resin composition according to the present invention is adjusted according to the purpose, and although there is no particular limitation, it is preferably about 30 to 90% by weight.

The method for producing the resin composition of the barium strontium titanate fine particle powder according to the present invention is not particularly limited as long as it involves the barium strontium titanate fine particle powder and a resin; and spin coating and the like are mentioned.

EXAMPLES

Examples of the present invention will be described below, but the present invention is not limited to these.

The average primary particle size was measured from about 300 particles in a photograph (150,000 × magnification) observed with a scanning electron microscope (S-4800 manufactured by Hitachi High-Technologies Corporation). Here, the average primary particle size is the particle size calculated by averaging the diameter of a circle having the same area as the area determined from the photograph for each particle for all measured particles.

The lattice constant a of the barium strontium titanate fine particle powder and the strontium and barium contents in the composition were measured using an "Xray diffractometer D8ADVANCE" (manufactured by Bruker Japan Co., Ltd.) (tube: Cu) in the $2\theta$ range of 10 to 90°, and were calculated using "analysis software TOPAS" (manufactured by Bruker Japan Co., Ltd.) by the Rietveld method.

The molar ratio of the barium strontium titanate fine particle powder, expressed as (Sr+Ba)/Ti, was measured using a fluorescent X-ray analyzer (ZSX Primus II, manufactured by Rigaku Holdings Corporation).

The refractive index of the barium strontium titanate fine particle powder was calculated according to the following formula using the particle density of the fine particle powder, the refractive index of the dispersion, and the solid content in the dispersion. When the dispersion is considered to be a complex of a solvent and a filler (powder), the refractive index n of the dispersion is calculated by the following formula (1). V1 is the volume fraction of the filler, n1 is the refractive index of the filler, V2 is the volume fraction of the solvent, and n2 is the refractive index of the solvent. That is, the refractive index of the filler can be calculated from the measured refractive index and the volume fraction of each component in the dispersion.

[Mathematical formula 1]

$$n = V1 \times n1 + V2 \times n2 \ldots (1)$$

The refractive index n1 of the filler is expressed by the following formula (2). Since it is difficult to actually measure the volume fraction in the dispersion, when converting from the weight fractions w1 (filler) and w2 (solvent) and the densities d1 (filler) and d2 (solvent) of each component, which are easy to measure, the following formulas (3) and (4) are applied, respectively. The refractive index of the filler can be calculated by substituting formulas (3) and (4) into formula (2).

[Mathematical formula 2]

$$n1 = \frac{n - n2 \times V2}{V1} \ldots (2)$$

[Mathematical formula 3]

$$V1 = \frac{\dfrac{w1}{d1}}{\dfrac{w1}{d1} + \dfrac{w2}{d2}} \ldots (3)$$

[Mathematical formula 4]

$$V2 = \frac{\dfrac{w2}{d2}}{\dfrac{w1}{d1} + \dfrac{w2}{d2}} \ldots (4)$$

The dispersion was prepared by mixing 2 g of each barium strontium titanate fine particle powder with 8 g of 2-methoxypropanol for 120 minutes to prepare a dispersion with a solid content of 20% by weight. The refractive index of the dispersion was measured using a refractive index measuring device, Abbe refractometer RX-7000α (manufactured by ATAGO Co., Ltd.).

The solid content in the dispersion was calculated from the formula (5) by calcining the barium strontium titanate dispersion in a muffle furnace at 300°C for 1 hour.

[Mathematical formula 5]

$$(\text{weight after calcination (g)}/\text{weight before calcination (g)}) \times 100 \qquad (5)$$

The particle density was measured using a particle density measuring device BELPYCNO (manufactured by Microtrack Bell Co., Ltd.).

The specific surface area was evaluated by the BET method.

The degree of thin film white turbidity was evaluated by the following method.

One gram (1 g) of each particle powder, 9 g of propylene glycol monomethyl ether acetate (PGMEA), and 0.1 g of a polymer dispersant (Disperbyk-180, manufactured by BYK Japan KK) were dispersed in a paint shaker for 60 minutes, and the dispersion was used to prepare a coating with a thickness of 12 μm on a PET film using a bar coater. Each coating was visually observed, and transparent films without white turbidity were marked with ∘, and films with white turbidity were marked with ×.

Example 1

A titanium tetrachloride aqueous solution was mixed with water to obtain a solution with a molar concentration of Ti of 2.10 mol/l. A 20 wt% aqueous strontium hydroxide solution was added so that the Sr/Ti molar ratio was 1.32 to obtain a titanium hydroxide hydrous slurry. The titanium hydroxide hydrous slurry was washed with water and heated at 90°C for 15 minutes using an electric heater, and then added to a mixed solution of an aqueous strontium hydroxide solution and an aqueous barium hydroxide solution. The aqueous strontium hydroxide solution had a Sr/Ti molar ratio of 1.40, and the aqueous barium hydroxide solution had a Ba/Ti molar ratio of 0.60. The wet reaction temperature was 90°C, the reaction time was 3 hours, and the barium strontium titanate concentration was 0.28 mol/l. Thereafter, a hydrothermal reaction was carried out at 180°C for 8 hours, and the mixture was cooled to room temperature, then, washed with water, filtered, and dried to obtain a white powder of barium strontium titanate fine particles.

When the obtained barium strontium titanate fine particle powder was observed with an electron microscope, it was found that the average primary particle size was 19.5 nm, the Sr/(Sr+Ba) in the composition was 0.8790, and X-ray diffraction revealed that it was a single phase of barium strontium titanate with a lattice constant a of 3.9210 Å, and the difference of the theoretical lattice constant from this value was 0.0056 Å.

Examples 2 to 4

A barium strontium titanate fine particle powder was obtained in the same manner as in Example 1, except that the amounts of strontium hydroxide and barium hydroxide during the wet reaction were changed as shown in Table 1.

Comparative Example 1

The wet reaction was carried out in the same manner as in Example 1, followed by washing with water, filtration and drying, to obtain a white powder of barium strontium titanate fine particles without carrying out a hydrothermal reaction.

Comparative Example 2

A barium strontium titanate fine particle powder was produced with reference to Example 4 of Patent Literature 1. That is, a flask was placed in a glove box purged with nitrogen gas, 2-methoxyethanol was placed in the flask, and metallic barium, metallic strontium, and tetraethoxytitanium were further added. After metallic barium, metallic strontium, and tetraethoxytitanium were completely dissolved, the liquid was refluxed for 2 hours, and a liquid obtained by diluting water with 2-methoxyethanol was added while stirring in a thermostatic bath maintained at 70°C. After stirring was continued for 5 hours to cause a reaction, the liquid was cooled and centrifuged for 30 minutes with a centrifugal acceleration of 38,000 G, to obtain a barium strontium titanate fine particle powder.

Comparative Example 3

The wet reaction was carried out in the same manner as in Example 1, except that the amounts of strontium hydroxide and barium hydroxide during the wet reaction were changed as shown in Table 1, and then, the mixture was washed with water, filtered, and dried, and then heated at 900°C in an electric furnace for 2 hours to obtain a white powder of barium strontium titanate fine particles.

The properties of each of the obtained barium strontium titanate fine particle powders are shown in Table 2, and the properties of each dispersion are shown in Table 3.

Table 1

|  | neutralization reaction Sr/Ti [mol ratio] | wet reaction Sr/Ti [mol ratio] | wet reaction Ba/Ti [mol ratio] | wet reaction concentration [mol/l] |
|---|---|---|---|---|
| Example 1 | 1.32 | 1.40 | 0.60 | 0.28 |
| Example 2 | 1.32 | 1.00 | 1.00 | 0.28 |
| Example 3 | 1.32 | 0.60 | 1.40 | 0.28 |
| Example 4 | 1.32 | 0.20 | 1.80 | 0.28 |

(continued)

| | neutralization reaction Sr/Ti [mol ratio] | wet reaction Sr/Ti [mol ratio] | wet reaction Ba/Ti [mol ratio] | wet reaction concentration [mol/l] |
|---|---|---|---|---|
| Comparative Example 1 | 1.32 | 1.40 | 0.60 | 0.28 |
| Comparative Example 2 | - | 1.00 | 1.00 | 0.01 |
| Comparative Example 3 | 1.32 | 0.20 | 1.80 | 0.28 |

Table 2

| | average primary particle size | lattice constant a | lattice constant a - theoretical lattice constant | composition | | particle density | refractive index of powder | BET |
|---|---|---|---|---|---|---|---|---|
| | [nm] | [Å] | [Å] | Sr/(Sr+Ba) | (Sr+Bay)Ti | [g/cc] | | [m$^2$/g] |
| Example 1 | 19.5 | 3.9210 | 0.0056 | 0.8790 | 1.0056 | 4.67 | 2.17 | 58.4 |
| Example 2 | 24.8 | 3.9230 | 0.0008 | 0.8113 | 0.9995 | 4.77 | 2.18 | 49.5 |
| Example 3 | 26.9 | 3.9560 | 0.0051 | 0.5309 | 0.9625 | 5.11 | 2.21 | 40.7 |
| Example 4 | 38.4 | 3.9928 | 0.0065 | 0.1833 | 0.9537 | 5.54 | 2.23 | 28.2 |
| Comparative Example 1 | 12.3 | 3.9473 | 0.0094 | 0.6580 | 0.9932 | 4.48 | 2.04 | 98.6 |
| Comparative Example 2 | 20.0 | 3.9752 | 0.0147 | 0.4366 | 0.9344 | 4.65 | 2.10 | 58.4 |
| Comparative Example 3 | 64.9 | 3.9929 | 0.0728 | 0.2007 | 0.8132 | 5.47 | 2.25 | 16.9 |

Table 3

| | solid content in dispersion [wt%] | refractive index of dispersion | evaluation of degree of white turbidity of thin film |
|---|---|---|---|
| Example 1 | 20.1 | 1.439 | ○ |
| Example 2 | 18.9 | 1.440 | ○ |
| Example 3 | 20.0 | 1.439 | ○ |
| Example 4 | 20.2 | 1.437 | ○ |
| Comparative Example 3 | 16.4 | 1.431 | × |

The barium strontium titanate fine particle powders obtained in the examples all had an average primary particle size of 50 nm or less, which was fine. The barium strontium totanate fine particle powders obtained in the examples 1 and 3 were a mixture of spherical, rectangular, or cubic fine particles. The barium strotium titanate fine particle powder obtained in the example 2 was a fine particle powder with angular rectangular or cubic shapes, and the one obtained in the example 4 was a spherical barium strontium titanate fine particle powder. In all the examples, fine particle powders with uniform particle size were obtained.

In addition, the difference between the theoretical lattice constant and the lattice constant a of the barium strontium titanate fine particle powder obtained in the examples was 0.0080 or less in all cases, indicating high crystallinity. Therefore, the barium strontium titanate fine particle powder according to the present invention can be said to be a highly crystalline barium strontium titanate fine particle powder having particle characteristics closer to bulk, and the refractive index of the particles and dispersion is high. In addition, the thin film coatings containing the barium strontium titanate fine particle powder according to the present invention are all transparent and not white-turbid, and the barium strontium titanate fine particle powder according to the present invention can be said to be a barium strontium titanate fine particle powder with excellent dispersibility and transparency. That is, the barium strontium titanate fine particle powder according to the present invention is a fine particle and has high refractive index, thus, can be dispersed in a solvent or resin, is suitable as a filler, and can be used to prepare a dispersion or resin composition with high transparency by containing the filler in a resin or solvent.

INDUSTRIAL APPLICABILITY

The barium strontium titanate fine particle powder according to the present invention has high refractive index because the average particle size can be controlled according to the purpose and has a lattice constant close to the bulk value. The fine particle powder is fine and highly crystalline, so it can provide a colorless, transparent, and high refractive index composite film. Therefore, the barium strontium titanate fine particle powder according to the present invention is ideal for a high refractive index inorganic filler for increasing the refractive index of a resin composition in a brightness improvement film used in a display or a diffractive optical element used in XR (VR/AR/MR) glass, etc.

**Claims**

1.  A barium strontium titanate fine particle powder having an average primary particle size of 50 nm or less and a value calculated by the following relational formula 1 of 0 Å or more and 0.008 Å or less:

$$\text{relational formula 1:} \quad a-(4.005-0.102x)$$

wherein, the lattice constant of the particle is a, and the value of the strontium content in the composition, $Sr/(Sr+Ba)$, is x.

2.  The barium strontium titanate fine particle powder according to claim 1, having a composition represented by $Ba:Sr= (1-x):x$ $(0<x<1)$.

3.  A method for producing a barium strontium titanate fine particle powder, comprising:

    mixing a titanium raw material with an alkaline aqueous solution,
    neutralizing the mixture to obtain a hydrous titanium hydroxide slurry,
    washing the slurry with water,
    heating the slurry,
    adding the slurry to a mixed solution of an aqueous strontium solution and an aqueous barium solution, and subjecting the slurry to a wet reaction at a temperature range of 100 to 300°C, followed by washing the slurry with water and drying the slurry.

4.  A dispersion comprising the barium strontium titanate fine particle powder according to claim 1.

5.  A resin composition comprising the barium strontium titanate fine particle powder according to claim 1 and a resin.

## INTERNATIONAL SEARCH REPORT

| International application No. |
|---|
| **PCT/JP2024/001576** |

| **A.** | **CLASSIFICATION OF SUBJECT MATTER** |
|---|---|

*C01G 23/00*(2006.01)i
FI:   C01G23/00 C

According to International Patent Classification (IPC) or to both national classification and IPC

| **B.** | **FIELDS SEARCHED** |
|---|---|

Minimum documentation searched (classification system followed by classification symbols)

C01G23/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | JP 2010-120850 A (SAKAI CHEM. IND. CO., LTD.) 03 June 2010 (2010-06-03) example 14 | 1-3 |
| Y | | 4-5 |
| X | JP 6-48734 A (TEIKA CORP.) 22 February 1994 (1994-02-22) examples 22-28 | 1-3 |
| Y | | 4-5 |
| X | JIANG, Haoyu et al., Atomic resolution characterization on the structure of strontium doped barium titanate nanoparticles, Nano Research, 2021, vol. 14, pp. 4802-4807 2.1, fig. 2 | 1-2 |
| Y | | 4-5 |
| Y | JP 2007-231253 A (ASAHI GLASS COMPANY, LIMITED) 13 September 2007 (2007-09-13) claims 1-2 | 4-5 |

✓ Further documents are listed in the continuation of Box C.     ✓ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T"   later document published after the international filing date or priority date and not in conflict with the application but cited to understand the principle or theory underlying the invention

"X"   document of particular relevance; the claimed invention cannot be considered novel or cannot be considered to involve an inventive step when the document is taken alone

"Y"   document of particular relevance; the claimed invention cannot be considered to involve an inventive step when the document is combined with one or more other such documents, such combination being obvious to a person skilled in the art

"&"   document member of the same patent family

| Date of the actual completion of the international search | Date of mailing of the international search report |
|---|---|
| **08 March 2024** | **26 March 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**

International application No.

**PCT/JP2024/001576**

**C.     DOCUMENTS CONSIDERED TO BE RELEVANT**

| Category* | Citation of document, with indication, where appropriate, of the relevant passages | Relevant to claim No. |
|---|---|---|
| Y | JP 58-209005 A (KUREHA KAGAKU KOGYO KK) 05 December 1983 (1983-12-05) claims | 4-5 |

Form PCT/ISA/210 (second sheet) (July 2022)

**INTERNATIONAL SEARCH REPORT**
Information on patent family members

International application No.

**PCT/JP2024/001576**

| Patent document cited in search report | | | Publication date (day/month/year) | Patent family member(s) | Publication date (day/month/year) |
|---|---|---|---|---|---|
| JP | 2010-120850 | A | 03 June 2010 | (Family: none) | |
| JP | 6-48734 | A | 22 February 1994 | (Family: none) | |
| JP | 2007-231253 | A | 13 September 2007 | (Family: none) | |
| JP | 58-209005 | A | 05 December 1983 | (Family: none) | |

Form PCT/ISA/210 (patent family annex) (July 2022)

**REFERENCES CITED IN THE DESCRIPTION**

**Patent documents cited in the description**

- WO 20114750 A
- JP HEI664924 A

- JP HEI416513 A